# EUROPÄISCHE PATENTSCHRIFT

(11) **EP 0 707 878 B1**
(45) Veröffentlichungstag und Bekanntmachung des Hinweises auf die Patenterteilung: **19.01.2000**
(21) Anmeldenummer: 95810646.0
(22) Anmeldetag: 18.10.1995
(51) Int. Cl.: B01D 29/05, B29C 47/68

(54) **Filtervorrichtung mit Rückspülung**
Filter apparatus with back flow cleaning
Dispositif de filtre avec lavage à contre-courant

(30) Priorität: 19.10.1994 CH 313794
(43) Veröffentlichungstag der Anmeldung: 24.04.1996
(73) Patentinhaber: BemaTec SA, 1110 Morges (CH)
(72) Erfinder: Herbener, Albert, CH-1009 Pully (CH)
(74) Vertreter: Riederer, Conrad A., Dr.

(56) Entgegenhaltungen:
- EP-A- 0 314 024
- EP-A- 0 372 203
- WO-A-92/01500
- CH-A- 384 545
- DE-A- 2 719 790
- FR-A- 2 356 445

## Beschreibung

Die vorliegende Erfindung betrifft eine Filtervorrichtung mit einem Gehäuse, einem im Gehäuse vorgesehenen Fliesskanal für ein durch einen flüssigen Kunststoff gebildetes Fluid einer im Gehäuse angeordneten, relativ zum Fliesskanal bewegbaren Siebplatte oder einem Schieber mit wenigstens zwei in Verschieberichtung der Siebplatte in Abstand voneinander angeordneten Siebnestern oder Durchlässen zur Aufnahme von Filterelementen, wobei im Betrieb jeweils wenigstens ein Siebnest mit wenigstens einem Filterelement zum Entfernen von Verunreinigungen aus dem flüssigen Kunststoff im Fliesskanal angeordnet ist, und einer Rückspülverbindung, welche in einer bestimmten Stellung der Siebplatte die stromabwärtsliegenden Seiten von zwei Siebnestern miteinander verbindet, sodass flüssiger Kunststoff vom einen, im Kunststoffstrom liegenden Siebnest in ein anderes Siebnest gelangen, in Gegenstromrichtung dasselbe durchdringt und durch einen im Filtergehäuse vorgesehenen Ablaufkanal ausgestossen werden kann.

In der Extrusionstechnik ist es zur Vermeidung von Betriebsstörungen und/oder zur Erreichung einer gleichbleibenden Qualität der extrudierten Produkte in der Regel erforderlich, die Kunststoffschmelze zu filtrieren. Zu diesem Zweck werden Extrusionswerkzeugen Filtriervorrichtungen vorgeschaltet, um den Schmelzestrom vor dessen Eintritt in das Extrusionswerkzeug zu filtrieren und dabei unerwünschte Verunreinigungen zu entfernen. Um die Extrusionsanlagen praktisch ununterbrochen in Betrieb lassen zu können, sind entsprechende kontinuierlich oder quasikontinuierlich arbeitende Filtervorrichtungen nötig. Eine kontinuierliche Betriebsweise ermöglichen z.B. Filtervorrichtungen, bei welchen eine kontinuierliche Reinigung des Siebes stattfindet, oder sogenannte Filterwechselvorrichtungen, bei welchen die verschmutzten Siebe während des Betriebs ausgewechselt werden können. Besonders vorteilhaft sind dabei Filtervorrichtungen, die beide Möglichkeiten, das Reinigen und das Austauschen der Siebe, während des Betriebs zulassen.

Um die Siebe während des Betriebs reinigen zu können, muss die Kunststoffschmelze im Gegenstrom durch das verschmutzte Sieb geleitet werden. Zu diesem Zweck sind die Filtervorrichtungen der vorbeschriebenen Art häufig mit Kanälen ausgestattet, die den Fliesskanal mit dem zu reinigenden Sieb verbinden. Damit lassen sich Verunreinigungen vom Sieb wegspülen. Dieser Vorgang wird häufig als "Rückspülen" (back-flushing) bezeichnet. Rückspülen ist prinzipiell zu unterscheiden vom Vorspülen oder Vorfluten. Bei den letztgenannten Tätigkeiten handelt es sich um einen Vorgang, bei welchem Kunststoff in eine Filterkavität eines neu in den Fliesskanal gebrachten Filterelementes geleitet wird, um die darin befindliche Luft zu verdrängen. Ein Rückspülen des Filterelementes im oben beschriebenen Sinn erfolgt beim Vorfluten in der Regel nicht.

Bekannt ist z.B. eine kontinuierlich arbeitende Filter- bzw. Siebvorrichtung mit einer sich drehenden Siebtrommel, bei welcher das Sieb durch einen Teilstrom der filtrierten Schmelze, welcher in umgekehrter Richtung durch das Sieb geführt ist, laufend gereingt wird (DE-OS-37 16 707). Zu diesem Zweck ist mit Bezug auf die Fliessrichtung der Schmelze hinter dem Sieb ein Spülspalt vorgesehen, welcher die Siebtrommel in einem Spülbereich schneidet, der dem Filtrierbereich diametral gegenüberliegt. Der Spülspalt ist mit einem Absperrglied versehen, welcher den Spülspalt wahlweise freigibt oder verschliesst. Eine analoge Konstruktionsweise ist z.B. bei der in der EP-A-0 379 966 offenbarten Filterwechselvorrichtung vorgesehen, bei welcher ein Spülkanal über eine Absperrvorrichtung wahlweise freigebbar oder absperrbar ist.

Die EP-A-0 314 024 beschreibt eine Filtereinrichtung für Extrusionsanlagen, bei der ein warmweicher Kunststoffstrom durch, von Schiebermittel auswechselbar getragene, temporär aus dem Kunststoffstrom herausbewegbare Filtermittel gepresst werden kann. Die Filtereinrichtung besitzt ein Filtergehäuse, in welchem ein Schieber verschiebbar geführt ist. Der Schieber besitzt zwei Strömungskanal-Abschnitte bildende, in Verschieberichtung in Abstand voneinander angeordnete Kammern, welche in Strömungsrichtung durch je zwei Filterplatten verschlossen sind und in der Mittelstellung des Schiebers über je zwei Zweigleitungen mit dem Einlasskanal kommunizieren. Weiter stehen die Kammern über je einen Durchlass und einen im Gehäuse verlaufenden Kanal in einer ersten Stellung des Schiebers mit dem Auslasskanal, in einer zweiten Stellung des Schiebers mit jeweils in Abstand von den Zweigleitungen vorgesehenen Rückströmkanälen in Verbindung. Dadurch, dass bei der beschriebenen Filtereinrichtung der Kunststoffstrom über die einander gegenüberliegenden Zweigleitungen in die Kammern geleitet wird, werden die Kammern in jeder Stellung des Schiebers symmetrisch der Anströmung resp. Rückströmung ausgesetzt, was ein druckentlastetes Verschieben des Schiebers erlaubt. Weiter sind die Abstände einerseits zwischen den Zweigleitungen und andererseits zwischen den Zweigleitungen und den Rückströmkanälen so, dass in jeder Stellung des Schiebers ein kontinuierlicher Kunststoffstrom aufrechterhalten bleibt.

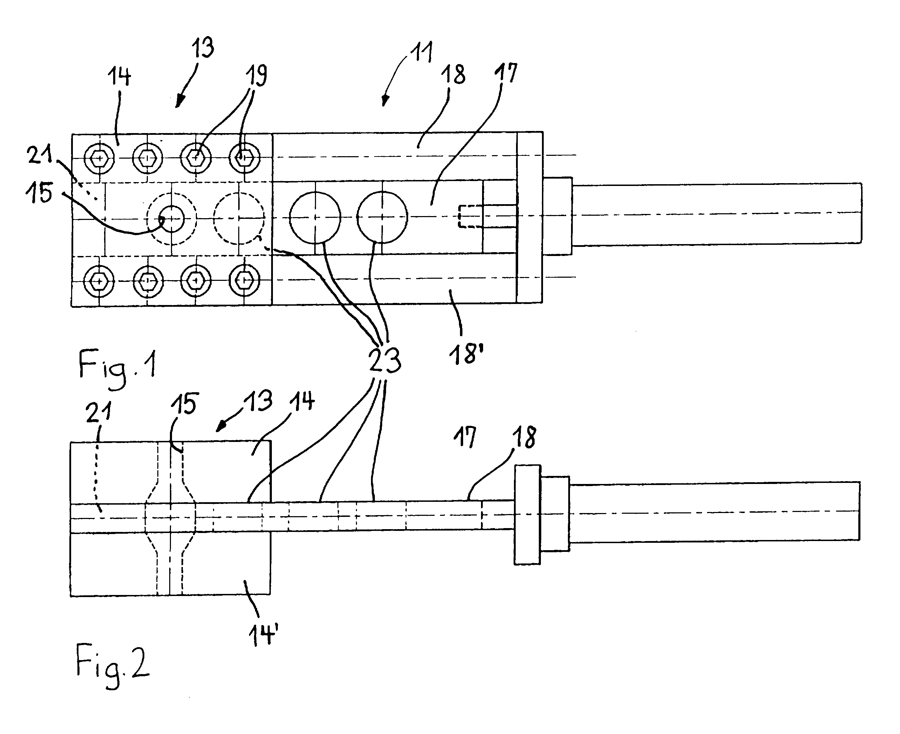

Während, wie bereits oben erwähnt, in der Mittelstellung des Schiebers beide Kammern mit dem Auslasskanal kommunizieren, steht in einer Zwischenstellung des Schiebers die eine Kammer mit dem Auslasskanal und die andere Kammer mit den einen Rückströmkanälen in Verbindung, wobei die Kammern über die Durchlässe gleichzeitig untereinander in Verbindung stehen. In der Endstellung des Schiebers steht die eine Kammer mit dem Auslasskanal in Verbindung, während die andere Kammer sich ausserhalb des Filtergehäuses befindet. In dieser Stellung können die Filter der letzterwähnten Kammer ausgewechselt werden. Nachteilig an der beschriebenen Filtereinrichtung ist, dass in der Arbeitsstellung des Schiebers gemäss Fig. 2, in welcher die Filtereinrichtung bestimmungsgemäss während der meisten Zeit zum Einsatz kommen soll, nur ein kleiner Teil der zur Verfügung stehenden Filterfläche vom Kunststoffstrom durchströmt wird, während der grössere Teil der Filterfläche ungenutzt ist. In der Zwischen- oder Rückspülstellung des Schiebers ist nur die eine Filterkammer im Einsatz, d.h. es fliesst nur die Hälfte des potentiellen Kunststoffstromes durch die Filtervorrichtung. Dabei geht ein Teil des noch durch die eine Filterkammer fliessenden Kunststoffstromes wiederum für die Rückspülung verloren, sodass der Durchsatz der Filtereinrichtung in der Zwischenstellung stark reduziert ist.

Die WO 92/01500 hat sich unter anderem zum Ziel gesetzt, die oben beschriebene Filtereinrichtung weiter zu verbessern. Sie offenbart jeweils paarweise auf einem verschiebbaren Trägerkörper oder Schieber angeordnete Siebnester, wobei jedoch im Unterschied zur Filtereinrichtung der EP-A-0 314 024 der durch die Filter fliessende Kunststoffstrom in zwei durch eine Trennwand voneinander getrennte Sammelräume gelangt. Die Trennwand ist durch eine einen Rückspülkanal bildende Bohrung durchsetzt. Im Trägerkörper sind in dessen Verschieberichtung in einem Abstand voneinander angeordnete Abströmkanäle vorgesehen. Diese erlauben die Abgabe des gefilterten Kunststoffstromes von den Sammelräumen an einen im Filtergehäuse vorgesehenen, nach innen trichterförmig erweiterten Abgabekanal. Auf der Zulaufseite sind paarweise angeordnete Zuströmkanäle vorgesehen, die ebenfalls in Verschieberichtung des Trägerkörpers in einem Abstand T voneinander versetzt angeordnet sind. Zum Rückspülen kann der Trägerkörper in eine von vier Rückspülstellungen gebracht werden, wobei in einer bestimmten Rückspülstellung jeweils eine bestimmte Hälfte eines der beiden Filter gespült wird. In der Regel ist in der Rückspülstellung jeweils einer der beiden Abströmkanäle durch die Innenwand des Filtergehäuses verschlossen, und nur zwei der vier Zuströmkanäle stehen in Verbindung mit dem Zuführkanal. Diese erlauben die Zufuhr des Kunststoffstromes zu einem der beiden Siebnester. Von den Zuführkanälen drei und vier ist der dritte ebenfalls durch die Innenwand des Gehäuses verschlossen, währenddem der vierte mit einem Kanal zum Abtransport der verunreinigten Schmelze in Verbindung steht. Beim Rückspülen strömt der Kunststoffstrom durch eines der beiden Siebnester in den dahinter liegenden Sammelraum und von dort grösstenteils durch den nicht verschlossenen Abströmkanal in den Abgabekanal. Ein Teil des gefilterten Kunststoffstromes fliesst durch den Rückspülkanal in den Sammelraum des anderen Siebnestes und von dort durch den offenen Zuströmkanal zum Kanal für den Abtransport der verunreinigten Schmelze nach aussen. Bei der Filtereinrichtung gemäss der WO 92/01500 ist also wesentlich, dass im Trägerkörper in Verschieberichtung mehrere versetzt voneinander angeordnete Zuström- und Abströmkanäle zu den Siebnestern vorgesehen sind und dass die Sammelräume durch einen Rückspülkanal miteinander in Verbindung stehen. Dies erlaubt es, je nach Stellung des Trägerkörpers die einen oder anderen Zuström- resp. Abströmkanäle freizugeben oder zu verschliessen. Vorteilhaft an der Filtereinrichtung gemäss WO 92/01500 ist, dass in jeder Stellung des Trägerkörpers ein Kunststoffstrom erhalten bleibt und der Druckunterschied im Abgabekanal gering ist, da jeweils nur eine Hälfte eines Siebnestes gespült wird. Herstellungsmässig erscheint die Filtereinrichtung jedoch ziemlich aufwendig. Weiter gibt die WO 92/01500 keine Anregungen, wie ein Filterwechsel ohne Produktionsunterbrechung bewerkstelligt werden könnte.

Aufgabe der vorliegenden Erfindung ist es, eine kostengünstig herzustellende Filtervorrichtung bereitzustellen, die die Nachteile der bekannten Filtervorrichtungen weitgehend vermeidet. Insbesondere soll die Filtervorrichtung eine möglichst lange Standzeit eines im Betrieb stehenden Filters oder Siebes und einen Filterwechsel ohne Produktionsunterbrechung erlauben.

Erfindungsgemäss wird dies bei einer Filtervorrichtung der eingangs erwähnten Art dadurch realisiert, dass die Rückspülverbindung als Ausnehmung ausgebildet ist, die in Verschieberichtung der Siebplatte entweder am Fliesskanal oder am Siebnest vorgesehen ist. Ueberraschenderweise genügen Ausnehmungen der beschriebenen Art in vielen Fällen, um einen für die Rückspülung eines Siebnests ausreichenden Rückspülstrom zu bilden. Im Unterschied zur EP-A-0 314 024 ist bei der erfindungsgemässen Vorrichtung keine Aufteilung des zufliessenden Kunststoffstromes notwendig. Der erfindungsgemässe Filter ist ein sogenannter "in-line" Filter, bei welchem der Hauptstrom nicht gespalten ist. Da auch in der Rückspülstellung im wesentlichen die ganze Siebnestfläche vom Kunststoffstrom durchflossen wird, ist nur ein geringer Druckabfall die Folge. Da ausserdem die vorgeschlagene Ausnehmung relativ klein sein kann, ist bei der erfindungsgemässen Lösung die Kunststoffmenge in den Ausnehmungen weit geringer als bei der Lösung gemäss EP-A-0 314 024, welche neben den Durchlässen einen relativ langen Kanal im Gehäuse vorsieht. Dadurch ist das Verkrackungsproblem entsprechend kleiner.Die vorliegende Lösung hat weiter den Vorteil, dass im Gegensatz zu der eingangs erwähnten DE-OS-37 16 707 auf Absperrmittel vollständig verzichtet werden kann. Ein weiterer Vorteil ist der relativ niedrige Herstellungsauwand der erfindungsgemässen Lösung, die sowohl in Radfiltern als auch in Linearfiltern eingesetzt werden kann. Die Ausnehmung kann z.B. durch Fräsen kostengünstig am Rand des Siebnestes oder am Rand des Fliesskanals hergestellt sein. Grundsätzlich kann die Ausnehmung auch in einer Erweiterung des Fliesskanals bestehen.

Wenn die Ausnehmung am Gehäuse vorgesehen ist, muss lediglich eine Ausnehmung an der der Siebplatte zugekehrten Seite des Gehäuses am Rande des Fliesskanals ausgebildet sein. Wenn die Ausnehmung in der Siebplatte vorgesehen ist, dann muss an jedem Siebnest, resp. Rand des Siebnestes in Verschieberichtung der Siebplatte wenigstens eine Ausnehmung ausgebildet sein. Die Anordnung der Rückspülverbindung am Fliesskanal oder Siebnest hat ausserdem den Vorteil, dass auf eine Vorrichtung zum Vorfluten des Filters verzichtet werden kann, da in einer bestimmten Stellung der Siebplatte der durch die Ausnehmung fliessende Kunststoffstrom das in den Fliesskanal einzuführende Siebnest, resp. die ganze Filterkavität, mit Kunststoff füllen kann.

Zweckmässigerweise ist die Ausnehmung als im Querschnitt ungefähr halbrunder Kanal ausgebildet. Ein derart ausgebildeter Kanal kann gut gereinigt werden, und der Kunststoff kann sich praktisch nicht festsetzen.

Eine vorteilhafte Ausführungsform der Filtervorrichtung ergibt sich dann, wenn zwei Ablaufkanäle und wenigstens zwei Ausnehmungen am Fliesskanal oder am Siebnest vorgesehen sind. Dadurch kann ein Rückspülen und Vorfluten von zwei Seiten her erfolgen, unabhängig von der Bewegungsrichtung der Siebplatte. Bei einer linearen Filteranordnung wird dadurch ein kontinuierlicher Betrieb der Vorrichtung ermöglicht, weil die Verschieberichtung der Siebplatte umgekehrt werden kann. Bei einem Radfilter reicht prinzipiell eine Ausnehmung am Fliesskanal oder am Siebnest aus. Vorteilhaft sind die Ausnehmungen und die Ablaufkanäle bezüglich eines sich in Rückspülstellung sich befindlichen Siebnestes diametral angeordnet. Dadurch durchfliesst der der Rückspülung resp. der Vorflutung dienende Kunststoff das ganze Siebnest, sodass die Verunreinigungen weitgehend entfernt werden können, resp. das ganze Siebnest mit Kunststoff gefüllt wird.

Zweckmässigerweise weisen die Siebnester Siebe und zugeordnete Halte- oder Distanzmittel auf, die das Sieb fixieren. Als Distanzmittel eignen sich z.B. Stege, welche auf der stromaufwärtsliegenden Seite der Lochplatte angeordnet sind. Diese ermöglichen den Fluss der Schmelze im Gegenstrom durch das Sieb in Richtung zum Ablaufkanal.

Vorteilhaft sind die Siebnester als Sammelräume bildende Aussparungen an gegenüberliegenden Seiten der Siebplatte gebildet, wobei die Aussparungen durch Kanäle miteinander in Verbindung stehen. Durch die vorhandenen Sammelräume kann auch in einer Zwischenstellung der Siebplatte der Kunststoff sich über die ganze Siebnestfläche verteilen. Dadurch ergibt sich in der Rückspülstellung nur eine geringe Reduktion des Kunststoffstromdurchsatzes. Zweckmässigerweise ist das Siebnest als Einsatz ausgebildet und auswechselbar. Dies hat den Vorteil, dass das Siebnest für Reinigungszwecke aus der Filtervorrichtung entfernt werden kann. Zweckmässigerweise ruht der Einsatz auf einem Absatz der Siebplatte und ist durch einen Ring, dessen Innendurchmesser im wesentlichen dem Fliesskanalquerschnitt entspricht, in Abstand zum Gehäuse gehalten. Dies ist eine besonders einfache Lösung, die den Vorteil hat, dass der gesamte Fliesskanalquerschnitt ausgenutzt werden kann.

Erfindungsgemäss wird auch eine Filterwechselvorrichtung der oben beschriebenen Art zur Verfügung gestellt mit wenigstens vier fluchtend in einer länglichen Siebplatte angeordneten Siebnestern, zwei einander gegenüberliegend und innenseitig am Fliesskanal ausgebildeten Ausnehmungen und zwei in Verschieberichtung der Siebplatte jeweils in Abstand zum Fliesskanal im Gehäuse vorgesehenen Ablaufkanälen und einem derart dimensionierten Gehäuse, dass jedes Siebnest in wenigstens einer bestimmten Position der Siebplatte ausserhalb des Gehäuses zu liegen kommt, sodass ein oder mehrere Siebe ausgewechselt werden können. Diese Filtervorrichtung kann kontinuierlich betrieben werden, da ein Rückspülen der Siebe von beiden Seiten (bezüglich der Bewegungsrichtung der Siebplatte) her erfolgen kann. Weiter können die Siebe während des Betriebs ausgewechselt werden.

Nachfolgend werden Ausführungsbeispiele der Erfindung unter Bezugnahme auf die Figuren beschrieben. Es zeigt:
- Fig.1: eine Seitenansicht einer Siebwechselvorrichtung mit vier Siebnestern,
- Fig.2: eine Draufsicht auf die Vorrichtung von Fig.1,
- Fig.3: einen Längsschnitt durch eine erste Ausführungsform einer Siebwechselvorrichtung, bei welcher die Siebplatte sich in Rückspülstellung befindet,
- Fig.4: eine zweite erfindungsgemässe Ausführungsform, welche ausschnittsweise einen Längsschnitt durch ein Siebnest zeigt,
- Fig.5: eine Draufsicht auf das Siebnest von Fig.4,
- Fig.6: ein Ablaufschema, welches die Betriebsweise einer Siebwechselvorrichtung mit 4 Siebnestern zeigt:
a) Seitenansicht
b) Längsschnitt, und
- Fig. 7: einen Längsschnitt durch eine Siebwechselvorrichtung, bei welcher die Siebplatte sich in Filtrierstellung befindet.

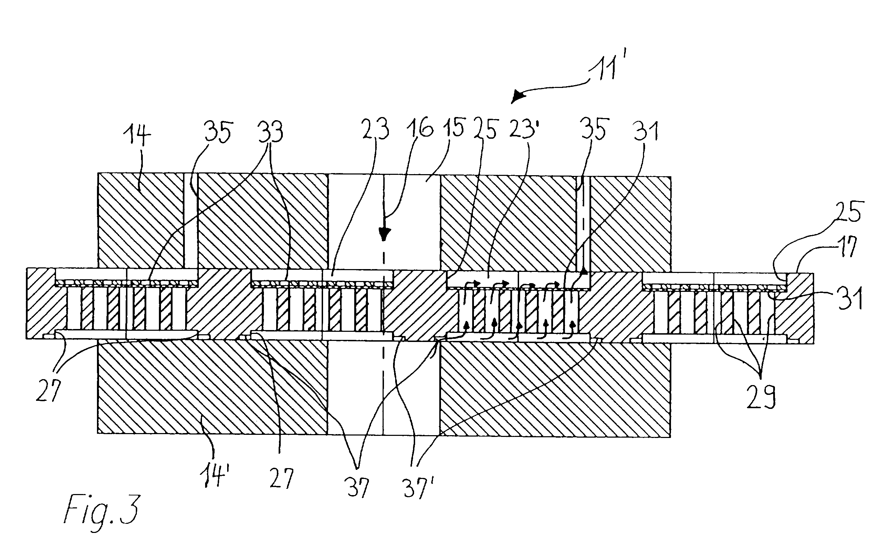

Die Filter- oder Siebvorrichtung 11 der Fig.1 und 2 besitzt ein Gehäuse 13 mit einem Fliesskanal 15 und einer quer zum Fliesskanal 15 verschiebbaren länglichen Siebplatte 17. Das Gehäuse 13 besteht im wesentlichen aus zwei Blöcken 14,14' und zwei Leisten 18,18', welche durch Schrauben 19 zusammengehalten werden. In einem Schlitz 21 des Gehäuses 13 ist die Siebplatte 17 verschiebbar geführt. Die Siebplatte 17 besitzt vier Siebnester 23, die durch Verschieben der Siebplatte 17 nacheinander in den Fliesskanal 15 eingeführt werden können, sodass im Betrieb, d.h. wenn ein Schmelzefluss (dargestellt in Fig. 3 durch Pfeil 16) durch den Kanal 15 stattfindet, Verunreinigungen aus der Schmelze entfernt werden. Die Siebnestfläche entspricht dabei im wesentlichen dem Fliesskanalquerschnitt. Die Antriebsmittel für die Siebplatte sind in den Figuren nicht gezeigt.

In Fig.3 ist eine Filtervorrichtung 11' näher dargestellt. Die Siebplatte 17 ist eine einstückige Platte, in welcher Siebnester 23 ausgebildet sind. Die Siebplatte könnte aber auch aus einzelnen Kassetten gebildet sein. Die Siebnester 23 sind durch Aussparungen 25,27 gebildet, welche als Sammelräume für den zu- resp. abfliessenden Kunststoffstrom dienen. Die Aussparungen stehen durch eine Vielzahl von Bohrungen 29 miteinander in Verbindung. In der bezüglich des Schmelzeflusses stromaufwärts liegenden Aussparung 25 ist ein Sieb 31 angeordnet, welches durch eine Lochplatte 33 fixiert ist. Im dritten Siebnest von links ist die Lochplatte 33 nicht eingezeichnet, um die Flussrichtung des der Rückspülung dienenden Kunststoffstromes durch Pfeile darzustellen. Die Lochplatte 33 kann durch nicht dargestellte Mittel, z.B. Klemmring, Bolzen etc, in der Aussparung 25 fixiert sein, um eine stabile Halterung der Siebe 31 während des Rückspülens zu gewährleisten.

Gemäss der in Fig.3 dargestellten ersten Ausführungsform der Erfindung ist im Block 14 des Gehäuses 13 auf beiden Seiten und in Abstand zum Fliess- oder Schmelzekanal 15 jeweils ein Ablaufkanal 35 vorgesehen. Ausserdem sind bei jedem Siebnest 23 auf der stromabwärtsliegenden Seite zwei sich gegenüberliegende Ausnehmungen 37, 37' vorgesehen, welche in der Bewegungsrichtung der Siebplatte 17 liegen.

In Fig. 3 ist die Siebplatte 17 in der Rückspülstellung dargestellt, d.h. in jener Stellung, die eingenommen wird, wenn das benachbarte Siebnest 23' in den Fliesskanal 15 eingeführt werden soll. Wenn das in der Zeichnung rechts vom Fliesskanal angeordnete Siebnest 23' über die Ausnehmung 37 mit dem Fliesskanal 15 in Verbindung steht, gelangt die unter Druck stehende Schmelze in das Siebnest 23', durchquert dieses in Gegenstromrichtung und verlässt die Siebwechselvorrichtung über den nach aussen führenden Ablaufkanal 35. Beim Durchfliessen des Siebnestes 23' werden im Sieb 31 zurückgehaltene Verunreinigungen von der Schmelze mitgerissen und aus der Vorrichtung entfernt. Die während des Rückspülens anfallende Schmelze kann in einem separaten Behältnis aufgefangen oder teilweise wieder dem Fliesskanal zugeführt werden.

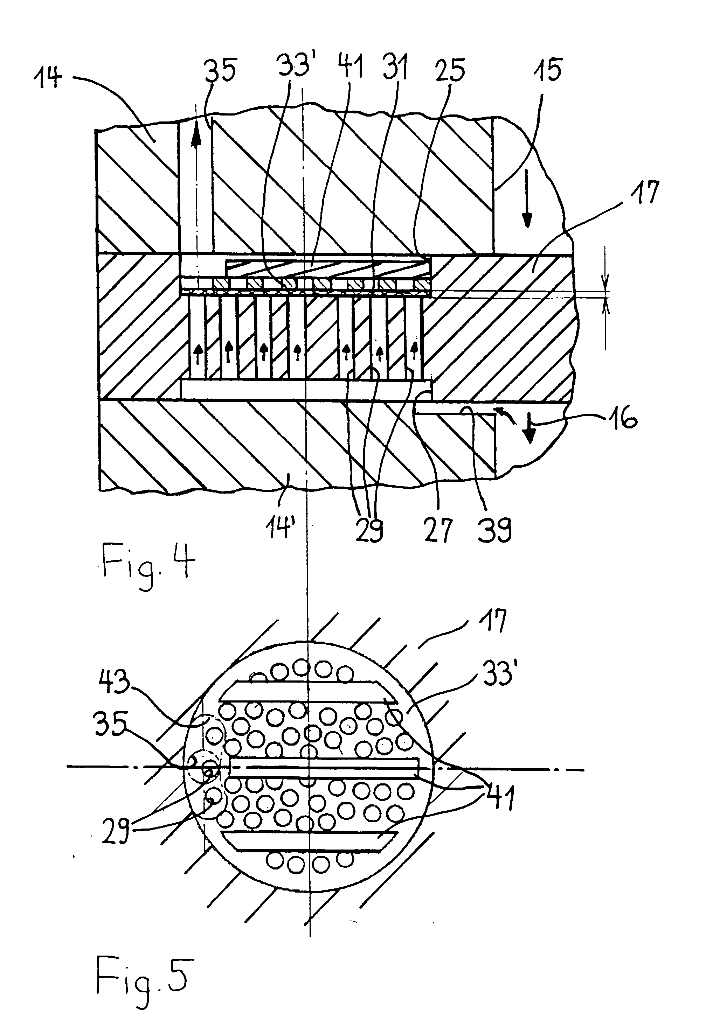

Der Ablaufkanal 35 ist vorzugsweise so im Gehäuse angeordnet, dass beim Rückspülen das ganze Siebnest 23, respektive die ganze Filterkavität, durch die rückfliessende Schmelze durchströmt wird. Dadurch kann die Bildung eines Totvolumens oder eines Sackes vermieden werden. In den gezeigten Ausführungsbeispielen (Fig.3,4) sind die Ausnehmungen 37,37' resp. 39 und die entsprechenden Ablaufkanäle 35 bezüglich des zu reinigenden Siebnestes 23 einander diametral angeordnet. Der durch die Ausnehmung sich einstellende Schmelzefluss hängt vom Querschnitt der Ausnehmung und von der Stellung der Siebplatte 17 ab. Die Dimensionierung der Ausnehmung kann in Abhängigkeit der Viskosität, des Verschmutzungsgrades etc. der Schmelze erfolgen. Ebenso können verstellbare Drosselelemente vorgesehen sein, die den Querschnitt der Ausnehmungen verändern können.

Im Unterschied zu dem in Fig.3 bereits dargestellten Ausführungsbeispiel ist bei der Ausführungsform gemäss Fig.4 wenigstens eine der Ausnehmungen als Ausnehmung 39 im Block 14' des Gehäuses 13 vorgesehen. Diese Ausführungsform ist herstellungsmässig weniger aufwendig, da die Ausnehmung 39 nur einmal am Rand des Schmelzekanals 15 an der der Siebplatte 17 zugekehrten Seite des Blocks 13 ausgefräst werden muss. Es ist also nicht bei jedem Siebnest 23 eine entsprechende Ausnehmung 39 notwendig. Ein weiterer Unterschied zur Ausführungsform von Fig.3 ist, dass die Lochplatte 33' an der Oberseite Stege 41 (Fig.5) aufweist. Die Stege 41 haben den Zweck, beim Rückspülen, wenn die Lochplatte durch die unter Druck stehende Schmelze in Richtung auf das Gehäuse 13 gedrückt wird, einen Schmelzefluss durch das Sieb 31 zum Ablaufkanal 35 hin zu ermöglichen. Es ist denkbar, die Stege an der Oberseite der Lochplatte als Ring auszubilden. Dank der Stege 41 kann die Lochplatte 33' lose in die Aussparung 25 eingelegt sein. Dadurch kann das Sieb 31 schnell ausgewechselt werden. Um der Schmelze den Eintritt in den Ablaufkanal 35 zu erleichtern, kann der Kanaleingang erweitert sein. Die erweiterte Kanalöffnung 43 wirkt dabei quasi als Verteilerkammer.

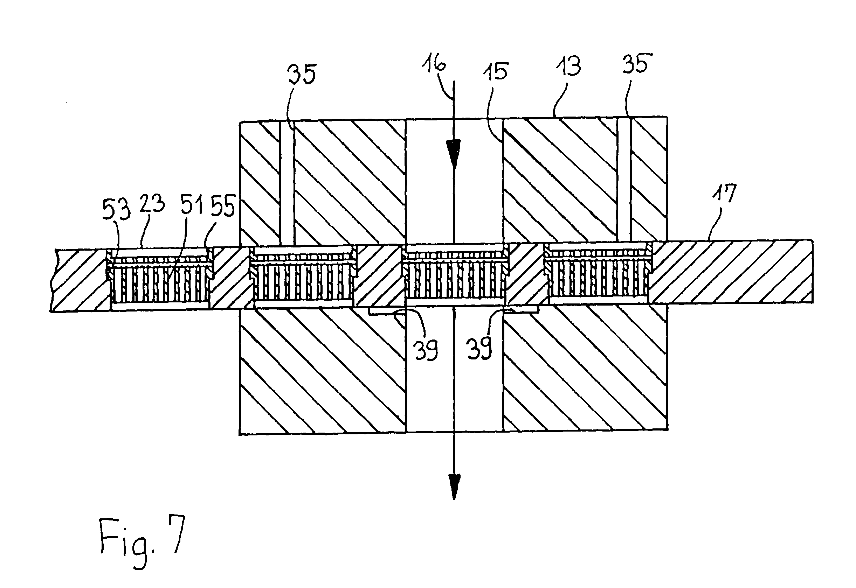

Eine besonders bevorzugte Ausführungsform einer Siebwechselvorrichtung ist in Figur 7 dargestellt. Sie entspricht im wesentlichen derjenigen von Figur 4 mit dem Unterschied, dass das Siebnest 23 als Einsatz 51 ausgebildet und auswechselbar ist. Der Siebnesteinsatz 51 liegt auf einem Absatz 53 der Siebplatte 17 auf. Ein Ring 55, welcher lose auf dem Sieb 31 aufliegen kann, sorgt dafür, dass das Sieb 31 beim Rückspülen in Abstand zum Gehäuse 13 gehalten wird und so einen ungehinderten Fluss der Kunststoffschmelze erlaubt. Bei dem gezeigten Ausführungsbeispiel wird in der Filtrierstellung der ganze Fliesskanalquerschnitt ausgenutzt.

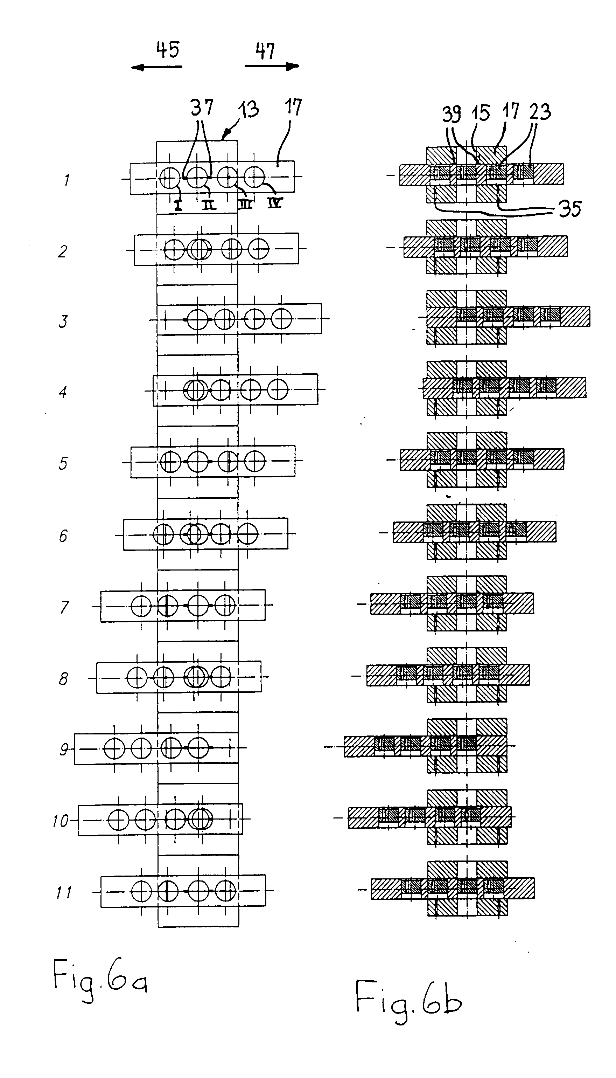

Die Betriebsweise einer Filterwechselvorrichtung 11' mit insgesamt 4 Siebnestern soll nun anhand der Fig.6 beispielhaft erklärt werden: Die Stellungen 1 bis 11 bezeichnen sämtliche Betriebszustände der Filterwechselvorrichtung 11'. Die ungeraden Zahlen zeigen die Vorrichtung in Filtrierstellung, die geraden Zahlen in Filtrier- und Rückspülstellung. Bei der gezeigten Filterwechselvorrichtung 11' sind im Gehäuse 13 zwei Ausnehmungen 39 vorgesehen, die bezüglich der Bewegungsrichtung der Siebplatte 17 am Fliesskanal 15 einander gegenüberliegend angeordnet sind. Dadurch können bei der Filterwechselvorrichtung 11' z.B. die zwei banachbarten Filterelemente I,II über einen längeren Zeitraum abwechslungsweise in Betrieb sein (Stellungen 1 bis 5). Wenn die Filterelemente I,II so verschmutzt sind, dass sie durch Rückspülen nicht mehr gereinigt werden können, können diese durch die Elemente III,IV ersetzt werden (Stellungen 6 bis 11). Der Betriebsweise wird nachfolgend näher erklärt.

Die Stellung 1 zeigt das Siebnest II in Filtrierstellung. Sobald eine gewisse Verschmutzung festgestellt wird, z.B. durch Feststellung eines Druckanstiegs, wird die Siebplatte 17 soweit in Richtung des Pfeiles 47 verschoben, bis eine Verbindung zwischen dem Fliesskanal 15 und dem Siebnest I hergestellt ist (Rückspülstellung; Stellung 2). In dieser Stellung kann die Schmelze weiterhin filtriert und das nachfolgende Siebnest II gereinigt werden. Das Siebnest II kann dabei vorher bereits in Betrieb gewesen sein (Filterkavität ist mit Schmelze gefüllt und Sieb ist verschmutzt) oder es kann ein neues, noch unverschmutztes Sieb aufweisen (Filterkavität ist noch leer). Im ersten Fall erfolgt in der Rückspülstellung 2 eine Reinigung des verschmutzten Siebes, im zweiten Fall das Vorfluten oder Vorfüllen der Filterkavität. Nach dem Rückspülen resp. Vorfluten wird das Siebnest I in Betrieb genommen (Stellung 3). In dieser Stellung 3 befinden sich die Siebnester III,IV ausserhalb des Gehäuses 13 und können durch neue ausgetauscht werden.

Die Siebnester I und II können abwechslungsweise solange in Betrieb sein, bis diese so stark verschmutzt sind, dass ein Auswechseln der Siebe unumgänglich ist. Sobald dieser Zeitpunkt erreicht ist, werden die Siebnester III und IV in Betrieb genommen (Stellungen 6 bis 11). In der Stellung 9 befinden sich die verschmutzten Siebnester I,II ausserhalb des Gehäuses 13 und können durch neue ersetzt werden.

Besonders vorteilhaft ist eine Betriebsweise, bei welcher die Siebe sich jeweils nur für eine relativ kurze Zeit im Fliesskanal befinden, d.h. es wird nicht wie bei anderen bekannten Verfahren, mit dem Siebwechsel solange zugewartet, bis ein merklicher Druckanstieg registriert werden kann. Durch ein rasches Wechseln zum nächsten Sieb mit vorgängiger Rückspülung kann verhindert werden, dass sich die Verunreinigungen im Sieb festsetzen. Dadurch, dass das Wechseln und Rückspülen eines Siebes unter Luftausschluss stattfindet (wechselseitiger Betrieb zweier Siebe), ist die Gefahr der Degradierung (Cracken) von thermisch instabilen Kunststoffschmelzen relativ gering.

Die oben beschriebene Lösung kann in Linear- als auch in Radfiltern mit oder ohne Siebwechselmöglichkeit vorgesehen werden. Dabei spielt die geometrische Form der Siebnesterob rund oder vier- oder mehreckig keine Rolle. Die beschriebene Filtervorrichtung ist besonders geeignet für das Filtrieren von leicht verschmutzten Kunststoffschmelzen.

## Patentansprüche

1. Filtervorrichtung mit einem Gehäuse, einem im Gehäuse (13) vorgesehenen Fliesskanal (15) für ein durch einen flüssigen Kunststoff gebildetes Fluid, einer im Gehause (13) angeordneten, relativ zum Fliesskanal (15) bewegbaren Siebplatte (17) oder einem Schieber mit wenigstens zwei in Verschieberichtung der Siebplatte in Abstand voneinander angeordneten Siebnestern (23) oder Durchlässen zur Aufnahme von Filterelementen (31), wobei im Betrieb jeweils wenigstens ein Siebnest (23) mit wenigstens einem Filterelement (31) zum Entfernen von Verunreinigungen aus dem flüssigen Kunststoff im Fliesskanal (15) angeordnet ist, und einer Rückspülverbindung, welche in einer bestimmten Stellung der Siebplatte die stromabwärtsliegenden Seiten von zwei Siebnestern miteinander verbindet, sodass flüssiger Kunststoff vom einen, im Kunststoffstrom liegenden Siebnest in ein anderes Siebnest gelangen, in Gegenstromrichtung dasselbe durchdringt und durch einen im Filtergehäuse vorgesehenen Ablaufkanal (35) ausgestossen werden kann, dadurch gekennzeichnet, dass die Rückspülverbindung als Ausnehmung (37,37';39) ausgebildet ist, die in Verschieberichtung der Siebplatte entweder am Fliesskanal oder am Siebnest vorgesehen ist.

2. Vorrichtung nach Anspruch 1, dadurch gekennzeichnet, dass die Ausnehmung (37,37';39) als im Querschnitt ungefähr halbrunder Kanal ausgebildet ist.

3. Vorrichtung nach Anspruch 1 oder 2, dadurch gekennzeichnet, dass wenigstens zwei Ablaufkanäle (35) und wenigstens zwei Ausnehmungen (37,37';39) vorgesehen sind.

4. Vorrichtung nach einem der Ansprüche 1 bis 3, dadurch gekennzeichnet, dass die Ausnehmungen (37,39) und die Ablaufkanäle bezüglich eines sich in Rückspülstellung sich befindlichen Siebnestes (23') diametral angeordnet sind.

5. Vorrichtung nach einem der Ansprüche 1 bis 4, dadurch gekennzeichnet, dass die Siebnester (23) Siebe (31) und zugeordnete Halte- oder Distanzmittel (33,33') aufweisen, die das Sieb (23) fixieren.

6. Vorrichtung nach Anspruch 5, dadurch gekennzeichnet, dass die Distanzmittel Stege (41) sind, welche an der Oberseite der Lochplatte (33') angeordneten Stegen (41) als Distanzmittel gebildet sind.

7. Vorrichtung nach einem der Ansprüche 1 bis 6, dadurch gekennzeichnet, dass die Siebnester jeweils durch Sammelräume bildende Aussparungen (25,27) an gegenüberliegenden Seiten der Siebplatte (17) gebildet sind, wobei die Aussparungen (25,27) durch Kanäle (29) miteinander in Verbindung stehen.

8. Vorrichtung nach einem der Ansprüche 1 bis 7, dadurch gekennzeichnet, dass das Siebnest als Einsatz (51) ausgebildet und auswechselbar ist.

9. Vorrichtung nach Anspruch 8, dadurch gekennzeichnet, dass der Einsatz (51) auf einem Absatz (53) der Siebplatte (17) ruht und durch einen Ring (55), dessen Innendurchmesser im wesentlichen dem Fliesskanalquerschnitt entspricht, in Abstand zum Gehäuse gehalten ist.

10. Filterwechselvorrichtung gemäss einem der Ansprüche 1 bis 9 mit wenigstens vier fluchtend in einer länglichen Siebplatte (17) angeordneten Siebnestern, zwei einander gegenüberliegend und innenseitig am Fliesskanal ausgebildeten Ausnehmungen (37,37') und zwei in Verschieberichtung der Siebplatte jeweils in Abstand zum Fliesskanal im Gehäuse (13) vorgesehenen Ablaufkanälen (35) und einem derart dimensionierten Gehäuse, dass jedes Siebnet (23) in wenigstens einer bestimmten Position der Siebplatte (17) ausserhalb des Gehäuses (13) zu liegen kommt, sodass ein oder mehrere Siebe (31) ausgewechselt werden können.

## Claims

1. Filter device comprising a housing; a flow channel (15) provided in the housing (13) for a fluid formed from liquid plastic; a screen plate (17) which is located in the housing (13) and is capable of moving relative to the flow channel (15); or a slide member having at least two sieve carriers (23) or channels for accommodating filter elements (31) positioned apart from one another in the sliding direction of the screen plate, wherein during operation, at least one sieve carrier (23) together with at least one filter element (31) respectively is situated in the flow channel (15) for the purpose of removing impurities from the liquid plastic; and a back-flushing connection which couples together the downstream sides of two sieve carriers in a specific position of the screen plate, such that liquid plastic is conducted from one sieve carrier which is in-line with the plastic flow path to the other sieve carrier, penetrates the latter in a back-flow direction and can thereby be eliminated through an outlet channel (35) that is incorporated in the filter housing, characterised in that the back-flushing connection is formed as a recess (37, 37'; 39) which is provided either in the flow channel or in the sieve carrier in the direction of displacement of the screen plate.

2. Device according to claim 1, characterised in that the recess (37, 37'; 39) has the approximate cross-sectional form of a semicircular channel.

3. Device according to claim 1 or 2, characterised in that at least two outlet channels (35) and at least two recesses (37, 37'; 39) are provided.

4. Device according to one of claims 1 to 3, characterised in that the recesses (37, 39) and the outlet channels are aligned diametrically opposite one another with respect to a sieve carrier (23') located in the back-flushing position.

5. Device according to one of claims 1 to 4, characterised in that the sieve carriers (23) comprise sieves (31) and associated supporting- or spacing means (33, 33') with which the sieve (23) is fixed.

6. Device according to claim 5, characterised in that the supporting- or spacing means (33, 33') are formed by a perforated plate (33') having vertical ridges (41) as spacing means arranged on the upper side of the perforated plate (33').

7. Device according to one of claims 1 to 6, characterised in that each of the sieve carriers is formed by cavities (25, 27) providing collection spaces on opposite sides of the screen plate (17), wherein the cavities (25, 27) are connected together through channels (29).

8. Device according to one of claims 1 to 7, characterised in that the sieve carrier is in the form of a cartridge (51) and is replaceable.

9. Device according to claim 8, characterised in that the cartridge (51) rests on a recessed ledge (53) of the screen plate (17) and is held displaced from the housing by a ring collar (55), the internal diameter of which substantially corresponds to the cross-section of the flow channel.

10. Filter change device according to one of claims 1 to 9, comprising at least four sieve carriers located in alignment in an elongated screen plate (17), two opposite facing recesses (37, 37') which are formed inside the flow channel and two outlet channels (35) positioned displaced relative to the flow channel in the housing (13) in the sliding direction of the screen plate, and a housing dimensioned in such a manner that each sieve carrier (23) comes to lie outside the housing (13) in at least one particular position of the screen plate (17), thereby enabling one or several sieves (31) to be replaced.

## Revendications

1. Dispositif de filtrage comprenant un boîtier, un canal d'écoulement (15) prévu dans le boîtier (13) pour un fluide constitué par une matière plastique liquide, une plaque de tamisage (17) disposée dans le boîtier (13) et mobile par rapport au canal d'écoulement (15) ou un coulisseau avec au moins deux nids de tamisage (23) disposés à distance l'un de l'autre dans le sens du déplacement de la plaque de tamisage ou des passages pour recevoir des éléments de filtrage (31), où en fonctionnement respectivement au moins un nid de tamisage (23) est disposé avec au moins un élément de filtrage (31) dans le canal d'écoulement (15) pour supprimer des impuretés de la matière plastique liquide, et avec une liaison de lavage à contre-courant reliant, dans une position donnée de la plaque de tamisage, les faces de deux nids de tamisage situées en aval du courant de telle sorte que la matière plastique liquide arrive depuis un nid de tamisage situé dans le courant de matière plastique dans un autre nid de tamisage, traverse ce dernier à contre-courant et puisse être expulsée par l'intermédiaire d'un canal d'écoulement (35) prévu dans le boîtier de filtre, caractérisé en ce que la liaison de lavage à contre-courant est configurée comme un creux (37, 37' ; 39) prévu dans le sens du déplacement de la plaque de tamisage soit sur le canal d'écoulement soit sur le nid de tamisage.

2. Dispositif selon la revendication 1, caractérisé en ce que le creux (37, 37'; 39) est configuré comme un canal d'une section transversale approximativement demi-circulaire.

3. Dispositif selon la revendication 1 ou 2, caractérisé en ce qu'au moins deux canaux d'écoulement (35) et au moins deux creux (37, 37'; 39) sont prévus.

4. Dispositif selon l'une des revendications 1 à 3, caractérisé en ce que les creux (37, 39) et les canaux d'écoulement sont disposés de façon diamétrale par rapport à un nid de tamisage (23') se trouvant en position de lavage à contre-courant.

5. Dispositif selon l'une des revendications 1 à 4, caractérisé en ce que les nids de tamisage (23) présentent des tamis (31) et des moyens de maintien ou de distance (33, 33') associés fixant le tamis (23).

6. Dispositif selon la revendication 5, caractérisé en ce que les moyens de maintien ou de distance (33, 33') sont constitués par une plaque perforée (33') avec des nervures (41) disposées sur la face supérieure de la plaque perforée (33') et servant de moyens de distance.

7. Dispositif selon l'une des revendications 1 à 6, caractérisé en ce que les nids de tamisage sont configurés respectivement par des évidements (25, 27) formant des espaces collecteurs aux faces opposées de la plaque de tamisage (17), les évidements (25, 27) étant reliés entre eux par des canaux (29).

8. Dispositif selon l'une des revendications 1 à 7, caractérisé en ce que le nid de tamisage est configuré comme un insert (51) interchangeable.

9. Dispositif selon la revendication 8, caractérisé en ce que l'insert (51) repose sur un retrait (53) de la plaque de tamisage (17) et qu'il est maintenu à distance du boîtier à l'aide d'une bague (55) dont le diamètre intérieur correspond pour l'essentiel à la section transversale du canal d'écoulement.

10. Dispositif d'échange de filtre selon l'une des revendications 1 à 9, comprenant au moins quatre nids de tamisage alignés dans une plaque de tamisage (17) oblongue, deux creux (37, 37') opposés l'un de l'autre et configurés sur la face intérieure du canal d'écoulement, et deux canaux d'écoulement (35) prévus dans le sens du déplacement de la plaque de tamisage respectivement à distance du canal d'écoulement dans le boîtier (13), et un boîtier de telles dimensions que chaque nid de tamisage (23) se trouve à l'extérieur du boîtier (13) dans au moins une position déterminée de la plaque de tamisage (17) permettant le remplacement d'un ou de plusieurs tamis (31).
